# FASCICULE DE BREVET EUROPEEN

(11) **EP 0 382 616 B1**
(45) Date de publication et mention de la délivrance du brevet: **10.01.1996**
(21) Numéro de dépôt: 90400302.7
(22) Date de dépôt: 05.02.1990
(51) Int. Cl.: F16D 13/68, F16F 15/12

(54) **Dispositif amortisseur de torsion, notamment pour disque de friction d'embrayage de véhicules automobiles**
Drehschwingungsdämpfer, insbesondere für die Kupplungsscheibe eines Kraftfahrzeuges
Torsion-damping device, especially for the friction clutch disc in a motor vehicle

(30) Priorité: 07.02.1989 FR 8901537
(43) Date de publication de la demande: 16.08.1990
(73) Titulaire: VALEO, F-75848 Paris Cédex 17 (FR)
(72) Inventeur: Graton, Michel, F-75020 Paris (FR); Dalbiez, André, F-95100 Argenteuil (FR)
(74) Mandataire: Gamonal, Didier

(56) Documents cités:
- DE-A- 3 810 921
- DE-A- 3 810 922
- FR-A- 2 524 097
- FR-A- 2 560 328
- FR-A- 2 560 330
- FR-A- 2 566 497
- FR-A- 2 611 245

## Description

La présente invention concerne les dispositifs amortisseurs de torsion, notamment pour disque de friction d'embrayage de véhicules automobiles, selon le préambule de la révendication 1.

Un tel dispositif amortisseur est décrit dans le document FR-A-2 611 245 (US-A-4,860,871). Dans ce document, les premiers et seconds moyens de frottement comportent chacun une rondelle de frottement disposée axialement entre une même rondelle de guidage et le voile, lesdites rondelles étant centrées par rapport à l'axe de l'ensemble.

La rondelle de frottement du premier dispositif de frottement entoure celle du second dispositif.

Pour le montage on procède sur un même poste à un empilage axial des constituants du disque de friction.

Dans certains cas il peut être intéressant de réduire le nombre de pièces à empiler et notamment de former des sous-ensembles avec une rondelle de guidage ou le voile pour écourter le temps de montage à ce poste.

La présente invention a pour objet de résoudre ce problème et donc de réduire le nombre de pièces à empiler en final, tout en tirant partie des rondelles de frottement et en procurant d'autres avantages.

Suivant l'invention, un dispositif du type sus-indiqué est caractérisé en ce que des moyens de butées sont prévus entre l'une desdites rondelles de frottement et le voile ou la rondelle de guidage concernée et en ce que des moyens de retenue axiale sont prévus entre les deux dites rondelles de frottement.

Grâce à l'invention l'une des rondelles de frottement est assemblée au voile ou à la rondelle de guidage concernée par l'intermédiaire de l'autre rondelle de frottement, en sorte qu'il est possible de créer séparément un sous-ensemble comportant lesdites rondelles de frottement et le voile ou la rondelle de guidage concernée. Ce sous-ensemble, éventuellement à jeu, peut être réalisé dans un lieu de production différent de celui où se produit l'assemblage final.

A ce sous-ensemble, selon les applications, peuvent être intégrés des moyens élastiques servant au tarage du frottement.

Il est même possible d'intégrer à la fois le voile et la rondelle de guidage au sous-ensemble en prévoyant, par exemple, des moyens de butées entre le voile et l'extrémité des pattes de la rondelle d'application décrite dans le sus-mentionné document FR-A-2 611 245, et des moyens de butées entre la rondelle de frottement interne et la rondelle de guidage.

Les moyens de butées peuvent consister en une pluralité de pattes de l'une des rondelles de frottement traversant des ouvertures correspondantes de la rondelle de guidage et reliées entre elles, après traversée de ladite rondelle de guidage, par un circlips engagé dans une gorge prévue dans l'extrémité libre desdites pattes, ledit circlips étant propre à coopérer à jeu avec la rondelle de guidage.

De préférence les moyens de butées consistent en des moyens d'encliquetage, avec des pattes d'un seul tenant avec la rondelle de frottement, avantageusement en matière synthétique, lesdites pattes étant associées aux pions de blocage en rotation desdites rondelles.

Avantageusement, ces pions sont tronqués pour formation des pattes. Grâce à cette disposition, les rondelles de guidage ou le voile sont inchangés et lesdites pattes peuvent être ménagées en les rendant moins large que les pions.

En variante des pattes élastiques analogues aux précédentes peuvent être prévues entre la rondelle de frottement concernée et le voile ou les rondelles de guidage pour intégration de celui-ci ou de celle-ci au sous-ensemble.

Les moyens de retenue axiale peuvent consister en un épaulement d'orientation radiale, tourné vers le voile ou la rondelle de guidage et porté par l'une des rondelles de frottement, l'autre rondelle de frottement présentant une portée propre à coopérer avec ledit épaulement.

Avantageusement, ces moyens de retenue axiale appartiennent à des moyens de prépositionnement de l'une des rondelles de frottement par rapport à l'autre.

La description qui va suivre illustre à titre d'exemple l'invention en référence aux dessins annexés dans lesquels :
- la figure 1 est une vue en coupe axiale d'un disque de friction selon l'invention;
- la figure 2 est une vue selon la flèche II de la figure 1 ;
- la figure 3 est une vue simplifiée des moyens d'engrènement à jeu prévus entre le voile et le moyeu;
- la figure 4 est une vue partielle agrandie, en coupe axiale, des premiers et seconds moyens de frottement de la figure 1;
- la figure 5 est une vue desdits moyens de frottement seuls avec leur moyens élastiques associés selon la flèche V de la figure 4;
- la figure 6 est une vue partielle d'une fenêtre du voile traversée par une patte supplémentaire selon l'invention;
- la figure 7 est une vue partielle analogue à la figure 1 pour une autre variante de réalisation.

Suivant la forme de réalisation choisie, le disque de friction d'embrayage pour véhicules automobiles, comporte un support 1 de garnitures de friction 2 et un moyeu 3, qui sont mobiles angulairement l'un par rapport à l'autre dans les limites d'un débattement angulaire déterminé; le support 1 et le moyeu 3 étant accouplés par deux dispositifs amortisseur de torsion d'action étagée, dont l'un A, dit préamortisseur, est plus faible que l'autre B, dit amortisseur principal.

Ce disque est destiné, par ces garnitures 2, à être serré entre le plateau de pression et de réaction (non représentés) de l'embrayage solidaires en rotation de l'arbre moteur du véhicule, tandis que par son moyeu 3 il est destiné à être calé en rotation sur l'arbre d'entrée de la boîte de vitesses.

Pour constitution du préamortisseur A un voile 4 est monté mobile angulairement par rapport au moyeu 3 à l'encontre de seconds moyens de frottement 5, dans les limites d'un débattement angulaire déterminé.

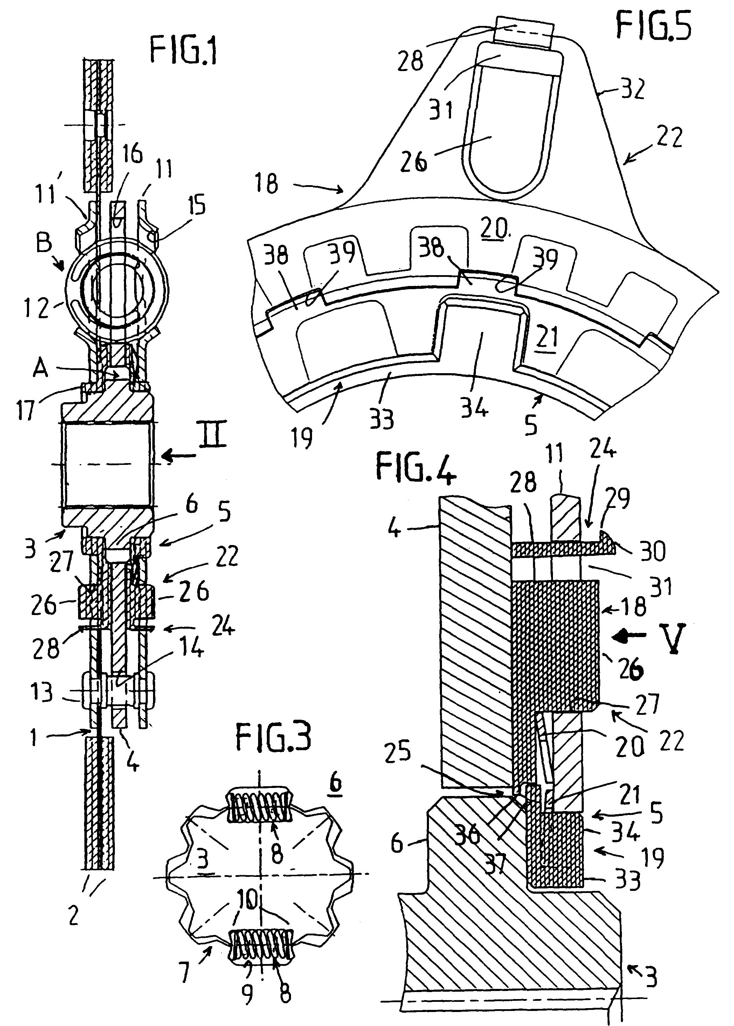

Ici (figure 3) le moyeu 3 présente à sa périphérie externe une bride 6 en regard du voile 4.

Des moyens d'engrènement à jeu 7, comme décrit dans le document FR-A-2 560 328 (US-A-4,669,592), sont pratiqués pour partie à la périphérie interne du voile 4 et pour partie dans la bride 6. Ces moyens d'engrènement 7 consistent en une pluralité de dents de forme trapézoïdale et en une pluralité d'échancrures complémentaires, lesdites dents du moyeu ou du voile pénétrant chacune avec jeu dans une échancrure du voile ou du moyeu.

Des seconds moyens élastiques 8 de faible raideur à action circonférentielle sont prévus, pour filtration des bruits dits de ralenti, au niveau des moyens d'engrènement 7.

Il s'agit ici de deux ressorts à boudin 8, diamétralement opposés, logés dans des échancrures 9 du voile 4 et du moyeu 3 avec intervention de socles 10 entre les extrémités des ressorts 8 et les bords des échancrures 9 en forme de dièdre.

Pour constitution de l'amortisseur principal B des rondelles de guidage 11, 11' sont montées coaxiales et mobiles angulairement par rapport au voile 4 à l'encontre de premiers moyens élastiques 12 à action circonférentielle, ici des ressorts à boudin 12, de plus forte raideur que les ressorts 8, dans les limites d'un débattement angulaire déterminé.

Ces rondelles 11,11' sont disposées axialement de part et d'autre du voile 4 en étant reliées à écartement axial fixe par des entretoises axiales 13 servant également à la fixation du support 1 accolé à la rondelle 11'.

Ces entretoises 13 traversent à jeu à cet effet des échancrures 14 du voile 4, la limitation du débattement angulaire relatif entre le voile 4 et les rondelles 11,11' pouvant s'effectuer par coopération des entretoises 13 avec les bords des échancrures 14 ou par venue à spires jointives des ressorts 12.

Les ressorts 12 sont logés dans des fenêtres 15,16, en regard les unes des autres, respectivement des rondelles de guidage 11,11' et du voile 4.

Les rondelles 11,11' entourent librement le moyeu 3, aucun moyen d'engrènement à jeu n'étant prévus, tandis que le voile 4 entoure le moyeu 3 avec intervention des moyens d'engrènement à jeu 7.

Un palier annulaire 17, à section globalement en forme de L, est interposé axialement entre le disque 1, doublant la rondelle 11', et le voile 4 en formant tranversalement une rondelle entretoise.

Ce palier est également inséré radialement entre la périphérie interne de la rondelle 11' et la périphérie externe du moyeu 3.

Il est lié en rotation à la rondelle 11', par coopération de formes, sa partie axiale annulaire possédant des bossages engagés dans des encoches complémentaires de la rondelle 11'.

Entre l'autre rondelle de guidage 11 et le voile 4 sont interposés des rondelles de frottement 18,19 et des moyens élastiques associés de tarage du frottement 20,21, ici sous forme de rondelles Belleville à pattes.

La rondelle 20 prend appui sur la rondelle 11 et sollicite la rondelle 18 en direction du voile 4 pour serrage du palier 17 entre le support 1 (la rondelle 11') et le voile 4.

La rondelle 21 prend appui sur la rondelle 11 et sollicite la rondelle 19 en direction de la bride 6, pour serrage du palier 17 entre la rondelle 11' (le support 1 s'étendant radialement au-delà de la bride 6) et la bride 6.

Les rondelles de guidage sont donc mobiles angulairement par rapport au voile 4 à l'encontre de premiers moyens de frottement 22 comportant les rondelles 18,20 et le palier 17. De même le moyeu 3 est mobile angulairement par rapport au voile 4 à l'encontre de seconds moyens de frottement 5 comportant les rondelles 19,21 et le palier 17 ; les deux moyens de frottement 22,5 étant coaxiaux et disposés radialement l'un au dessus de l'autre, les rondelles 18,20 entourant les rondelles 19,21.

Suivant l'invention des moyens de butées 24 sont prévus entre l'une des rondelles de frottement 18,19 et le voile 4 ou la rondelle de guidage 11,11' concernée et des moyens de retenue axiale 25 sont prévus entre les deux dites rondelles de frottement 18,19.

Ici les moyens de butée 24 consistent en des moyens d'encliquetage. Plus précisément la rondelle 18, avantageusement en matière synthétique comme la rondelle 19 et le palier 17, présente d'un seul tenant une pluralité de pattes sous forme de pions 26 cylindriques, axialement saillants, répartis régulièrement circulairement, traversant chacun une ouverture 27 cylindrique de la rondelle de guidage 11 pour liaison en rotation avec celle-ci.

La partie supérieure des pions 26 est interrompue pour ménagement de pattes 28 radialement élastiquement déformables, moins large que les pions 26 et plus longues axialement que ceux-ci, dont la dimension est inférieure àcelle des ouvertures 27 de manière décrite ci-après.

L'extrémité libre des pattes 28 est dotée d'un crochet 29, à extrémité arrondie 30 facilitant l'enfilage dans l'ouverture 27, ledit crochet 29 étant dirigé radialement à l'opposé de l'axe de l'ensemble pour formation d'un épaulement.

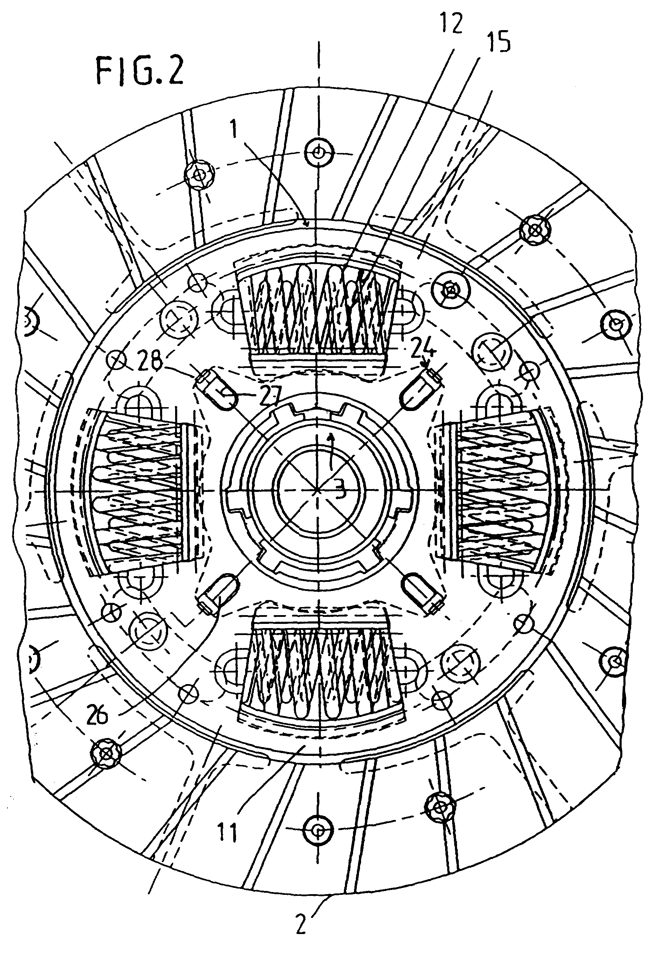

Chaque pions 26 cylindrique a une forme oblongue avec deux bords rectilignes raccordés par un fond arrondi (figure 5), et a dans sa partie basse une forme complémentaire à celle de l'ouverture 27.

C'est la patte 28, grâce à son crochet 29, qui est destinée à coopérer avec le bord radial supérieur de l'ouverture 27, ledit bord étant rectiligne et plus large que la patte 28 d'orientation axiale, en sorte qu'un contact latéral entre la patte 28 et les bords latéraux de l'ouverture 27 n'est pas à craindre (figure 2).

Une ouverture 31 existe entre la patte 28 et le bord supérieur des pions 26, lesdits pions 26 et pattes 28 étant réalisés chacun à la faveur d'une oreille 32 que possède la rondelle 18 à sa périphérie externe.

L'ouverture 31 peut être non débouchante (figure 1) ou débouchante (figure 4) pour donner plus de souplesse aux pattes 28.

Ici quatre oreilles 32 et quatre couples de pions 26 et pattes 28 sont prévus, les ouvertures 31 étant ouvertes au niveau de la face des oreilles 32 tournée vers le voile 4.

Bien entendu on aurait pu prévoir deux pattes latérales destinées à coopérer chacune avec l'un des bords latéraux de l'ouverture 27, mais cela est moins avantageux que la disposition à pattes radiales 28 qui permet de conserver le maximum de matière aux pions 26, pour un meilleur contact avec l'ouverture 27.

En outre aucune interférence n'est à craindre avec le diaphragme, que présente usuellement l'embrayage.

Les rondelles Belleville 20,21 sont montées tête-bêche et s'appuient sur les rondelles 18,19 en étant centrées respectivement par les pions 26 et un retour axial annulaire 33, que possède la rondelle 19 à sa périphérie interne.

Ce retour 33, interposé radialement entre la rondelle 11 et le moyeu 3, possède localement des bossages 34 pour coopération chacun avec une encoche complémentaire de la rondelle 11 et liaison en rotation avec celle-ci.

Ainsi qu'on l'aura compris les rondelles 20,21 permettent un tarage des frottements. En variante il peut s'agir de rondelles ondulées.

Les moyens de retenue axiale 25 comportent ici un épaulement d'orientation radiale 36 formé à la périphérie interne de la rondelle 18, ledit épaulement 36 étant tourné vers la rondelle de guidage 11 pour coopération avec une portée 37 appartenant à la périphérie externe de la rondelle 19, ladite portée 37 étant formée sur la face de la rondelle 19 tournée à l'opposé de la rondelle 11.

Ici les moyens de retenue 25 sont fractionnés, la portée 37 appartenant à des pattes 38 de la rondelle 19, saillantes radialement par rapport à la périphérie externe de ladite rondelle 19 et engagées chacune dans une échancrure 39 complémentaire prévue à la périphérie interne de la rondelle 18, lesdites échancrures étant fermées par les épaulements 36 (figure 4). Les moyens 25 appartiennent ainsi à des moyens de prépositionnement de l'une des rondelles par rapport à l'autre.

Bien entendu la disposition inverse est possible, la tranche de la rondelle 18 présentant des pattes engagées chacune dans une échancrure débouchante pratiquée à la périphérie externe de la rondelle 19, l'épaulement de retenue pouvant dans ce cas être réalisé sous forme de pattes, prolongeant la face de la rondelle 18 tournée vers le voile 4, en saillie radiale et en alternance avec les pattes précédentes, en étant plus longues que celles-ci et décalées axialement pour coopération avec la face de la rondelle 19 tournée vers le voile 4 et formation de la portée 37.

La portée peut être créer par fermeture de la rainure de la rondelle 19 à son extrémité la plus proche de la rondelle 11 pour coopération avec les pattes de la rondelle 18 engagées dans lesdites rainures.

En variante l'épaulement peut être continu et relier entre elles les pattes en faisant saillie par rapport à celles-ci.

Ainsi qu'on l'aura compris une liaison en rotation et un prépositionnement de la rondelle 19 par rapport à la rondelle 18 est obtenue grâce à ces dispositions, la forme de la rondelle 19 étant dictée par des considérations de standardisation, les bossages 34 pouvant très bien ne pas exister.

Ainsi il est possible de créer un sous-ensemble unitaire rondelles 11, 19, 18, 20, 21. Pour ce faire on empile d'abord la rondelle 21 puis la rondelle 19 puis la rondelle 20 et enfin la rondelle 18, dont les pattes 28 s'escamotent radialement en direction de l'axe de l'ensemble, grâce à l'ouverture 31, pour venir ensuite se crocheter, par leurs crochets 29 et sous l'action des rondelles 20,21, sur la face opposée de la rondelle de guidage 11.

En se reportant à la figure 4 on comprend, avant assemblage du voile 4 et du moyeu 3, que la rondelle 19 est retenue axialement par la rondelle 18, celle-ci venant en prise par son épaulement 36 avec la portée 37.

Après mise en place en final des entretoises 13 l'ensemble des rondelles 18,19 est comprimé et un jeu subsiste entre la rondelle 19 et l'épaulement 36 ainsi qu'entre le crochet 29 et la rondelle 11.

Bien entendu des jeux peuvent être prévus dans les moyens de butée 24 et dans les moyens de retenue axiale 25, la position des crochets 29 étant telle que les pions 26 ne puissent s'échapper des ouvertures 27 et tient compte de l'usure de la rondelle 18.

On appréciera, les rondelles de guidage 11,11' étant identiques entre elles, que le palier 17 peut présenter également des pions 26 et des pattes 28 pour engagement dans les ouvertures 27 de la rondelle 11'.

Grâce à cette disposition il est possible de former un sous-ensemble rondelles de guidage 11' support 1, les colonnettes 13 étant montées lors de l'assemblage final. Pour mémoire on rappellera, lorsque le support 1 se déplace angulairement par rapport au moyeu 3, que dans un premier temps les ressorts 8 sont comprimés et les rondelles de guidage 11,11' forment un bloc avec le voile 4 contenu de la raideur des ressorts 12 par rapport aux ressorts 8, jusqu'à ce que le jeu des moyens d'engrènement à jeu 7 soit annulé, puis dans un deuxième temps les rondelles de guidage 11,11' se déplacent angulairement par rapport au voile 4 à l'encontre des ressorts 12.

Ainsi dans un premier temps la rondelle 19 intervient, tandis que la rondelle 18 entre en action après solidarisation en rotation du voile 4 avec le moyeu 3. Bien entendu la présente invention n'est pas limitée aux exemples de réalisation décrits.

En particulier les moyens de retenue axiale 25 peuvent consister en des portées coniques complémentaires que présentent les rondelles 18 et 19 respectivement à leur périphérie interne et à leur périphérie externe. Les moyens 25 forment donc des moyens de prépositionnement.

Comme mentionné ci-dessus dans le cadre d'une disposition selon le document FR-A-2 611 245, l'épaulement 36 peut appartenir à la rondelle 19 ainsi que les moyens de butée 24, lorsque la rondelle de frottement 18 traverse le voile 4, des moyens de butée intervenant alors entre l'extrémité desdites pattes et la face du voile tourné à l'opposé de ladite rondelle de frottement 18. Ces moyens de butée peuvent comporter des pattes élastiquement déformables à crochets analogues aux pattes 28. Les crochets 29 étant dirigés vers l'axe de l'ensemble.

Dans ce cas les moyens de butée selon l'invention peuvent être prévus au niveau de la rondelle de frottement 19, comme du reste dans les figures décrites ci-dessus, les pattes 28 étant associées aux bossages 34.

Les pattes 28 peuvent être distinctes des pions 26, des ouvertures supplémentaires étant alors prévues dans les rondelles 11,11'.

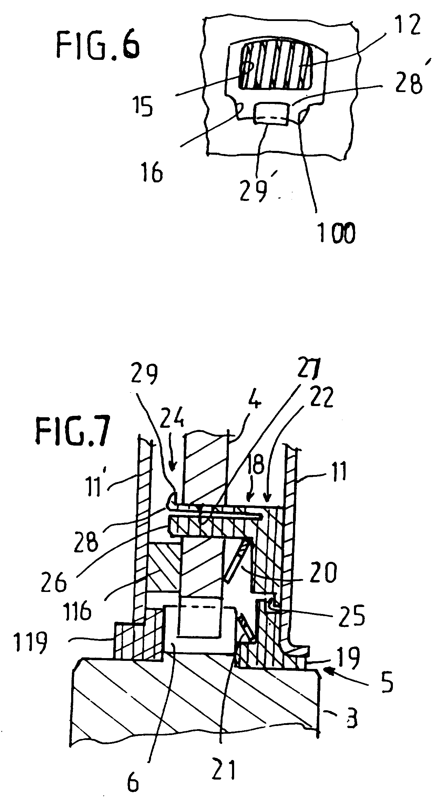

Des pattes supplémentaires 28', dirigées axialement en sens inverse des pattes 28 peuvent traverser le voile 4, par exemple à la faveur des fenêtres 15 (figure 6) conformées à cet effet avec la rondelle de guidage 11. Dans ce cas le bord interne de la fenêtre est échancrée en 100, pour permettre le passage à jeu circonférentiel de la patte 28', dont le crochet 29' est dirigé vers l'axe de l'ensemble et formation de moyens de butées supplémentaires.

Grâce aux pattes supplémentaires 28' le voile 4 peut être clipsé ou encliqueté sur le sous-ensemble rondelle de guidage 11 et moyens de frottement 22,5.

De même figure 7, un sous-ensemble voile 4 moyens de frottement 22,5 peut être formé par inversion de sens des rondelles 18 et 19, la rondelle 18 étant liée en rotation au voile 4.

Dans cette figure la rondelle 18 traverse des ouvertures 27 du voile, les moyens de butées 24 agissant entre le voile 4 et la rondelle 18 à pattes 28 et pions 26.

La rondelle 20 s'appuie sur le voile 4 et sollicite la rondelle 18 en contact avec la rondelle 11. La rondelle 21 prend appui sur la bride 6 et sollicite la rondelle 19 en contact de la rondelle 11. On notera, que la rondelle 21 étant continue, que celle-ci ne peut s'échapper du sous-ensemble 4,22,5, car les dents du voile 4, appartenant aux moyens d'engrènement 7, retiennent la rondelle 21.

On notera également que l'épaulement de retenue de la rondelle 18 est tournée vers le voile 4 et que ladite rondelle 18 peut être dotée de pattes supplémentaires, analogues aux pattes 28, pour venir se crocheter sur la rondelle 11.

Pour mémoire on signalera que la référence 119 représente un palier et la référence 116 une rondelle entretoise.

Bien entendu les moyens élastiques de faible raideur 8 peuvent appartenir à un préamortisseur à rondelles de guidage et voile disposés axialement entre le voile 4 et l'une des rondelles de guidage 11,11' comme décrits dans le sus-mentionnné document FR-A-2 611 245 et dans la demande DE-A-38 10 922 (US-A-4,883,156).

L'invention est applicable à un amortisseur de torsion dépourvu de support 1, par exemple l'une des rondelles de guidage 11,11' pouvant être directement fixée sur un volant solidaire de l'arbre du moteur, le moyeu étant accouplé à l'arbre d'entrée d'une boîte de variation de vitesses.

Le voile 4 peut être dédoublé comme décrit dans le document FR-A-2 566 497 (US-A-4,698,045).

Enfin les moyens élastiques 8,12 peuvent consister en des blocs élastiques, par exemple en caoutchouc.

## Revendications

1. Dispositif amortisseur de torsion, notamment pour disque de friction d'embrayage de véhicules automobiles, comportant deux rondelles de guidage (11,11') disposées axialement de part et d'autre d'au moins un voile (4) en étant coaxiales et mobiles angulairement par rapport à celui-ci à l'encontre de premiers moyens de frottement (22) et de premiers moyens élastiques à action circonférentielle (12), dans les limites d'un débattement angulaire, un moyeu (3) entouré par le voile (4) et les rondelles de guidage (11,11') en étant coaxial et mobile angulairement par rapport au voile (4) à l'encontre de seconds moyens de frottement (5) et de seconds moyens élastiques à action circonférentielle (8), dans les limites d'un débattement angulaire, lesdits premiers et seconds moyens de frottement (22,5) comportant chacun une rondelle de frottement (18,19) disposée axialement entre une même rondelle de guidage (11) et le voile (4) en étant centrée par rapport à l'axe de l'ensemble, ladite rondelle (18) du premier dispositif de frottement (22) entourant la rondelle (19) du second dispositif de frottement (5), l'une au moins desdites rondelles (18,19) étant liée en rotation à la rondelle de guidage concernée (11) ou au voile (4), caractérisé en ce que des moyens de butée (24) sont prévus entre l'une desdites rondelles de frottement (18,19) et le voile (4) ou la rondelle de guidage (11) concernée et en ce que des moyens de retenue axiale (25) sont prévus entre les deux dites rondelles de frottement (18,19).

2. Dispositif selon la revendication 1, caractérisé en ce que les moyens de butée (24) consistent en des moyens d'encliquetage.

3. Dispositif selon la revendication 2, caractérisé en ce que les moyens d'encliquetage (24) comportent des pattes radialement élastiquement déformables (28) à crochets (29), formant épaulement, traversant chacune une ouverture (27) d'une des rondelles de guidage (11,11') concernée ou du voile (4), propres à se crocheter après traversée de ladite ouverture (27), éventuellement après rattrapage d'un jeu, sur ladite rondelle de guidage (11,11') ou ledit voile (13).

4. Dispositif selon la revendication 3, caractérisé en ce que lesdites pattes (28) sont orientées axialement et sont d'un seul tenant avec la rondelle de frottement (18) du premier dispositif de frottement (22), en étant associées aux pions (26) de liaison en rotation avec ladite rondelle de guidage (11,11') concernée ou ledit voile (4) traversant lesdites ouvertures (27).

5. Dispositif selon la revendication 4, caractérisé en ce que les pions (26) sont interrompus pour ménagement desdites pattes (28) et en ce que lesdites pattes (28) sont plus longues que les pions (26) en étant moins larges que ceux-ci.

6. Dispositif selon la revendication 5, caractérisé en ce que la partie supérieure des pions est interrompue pour ménagement desdites pattes (28), en ce que chaque pion (26) a une forme oblongue avec deux bords rectilignes raccordés par un fond arrondi et a dans sa partie basse une forme complémentaire à celle de l'ouverture (27), et en ce que la patte (28), grâce à son crochet (29), est destinée à coopérer avec le bord radial supérieur de l'ouverture (27), ledit bord étant rectiligne et plus large que la patte (28) d'orientation axiale, en sorte qu'un contact latéral entre la patte (28) et les bords latéraux de l'ouverture (27) n'est pas à craindre.

7. Dispositif selon l'une quelconque des revendications précédentes, caractérisé en ce que les moyens de retenue axiale (25) comportent un épaulement d'orientation radiale (36), tourné vers la rondelle de guidage concernée (11,11') ou le voile (13) et porté par l'une des rondelles de frottement (18,19), l'autre rondelle de frottement présentant une portée (37) propre à coopérer avec ledit épaulement (36).

8. Dispositif selon l'une quelconque des revendications 1 à 7, caractérisé en ce que les moyens de retenue axiale (25) appartiennent à des moyens de prépositionnement d'une rondelle de l'un des moyens de frottement (5,22) par rapport à l'autre rondelle de l'autre des moyens de frottement (22,5).

9. Dispositif selon les revendications 7 et 8, caractérisé en ce que la portée (37) appartient à des pattes (38) de la rondelle de frottement (19) du second dispositif de frottement (5), lesdites pattes étant engagées chacune dans une échancrure complémentaire (39) de la rondelle (18) du premier dispositif de frottement (19), et en ce que lesdites échancrures (39) sont fermées par l'épaulement (36).

10. Dispositif selon la revendication 8, caractérisé en ce que les moyens de retenue axiale consistent en des portées coniques complémentaires que présentent les rondelles de frottement (18,19) des premiers moyens de frottement (22) et des seconds moyens de frottement (5) respectivement à leur périphérie interne et à leur périphérie externe.

11. Dispositif selon l'une quelconque des revendications précédentes, caractérisé en ce que des moyens de butées supplémentaires (28') sont prévus entre l'autre desdits éléments voiles (4) rondelle de guidage (11), non concernée par les moyens de butées (24).

12. Dispositif selon la revendication 11, caractérisé en ce que la rondelle de frottement (18) dudit premier dispositif de frottement (22) comporte des pattes supplémentaires (28'), radialement élastiquement déformables, à crochet (29'), dirigées axialement en sens inverse des pattes (28) pour venir se crocheter, éventuellement après rattrapage d'un jeu, sur l'autre desdits éléments voile (4) et rondelle de guidage (11,11') concernée après traversée d'une ouverture (100) dudit élément.

## Patentansprüche

1. Drehschwingungsdämpfer, insbesondere für die Kupplungsscheibe eines Kraftfahrzeugs, mit zwei Führungsscheiben (11, 11'), die axial beiderseits mindestens einer Mitnehmerscheibe (4) angeordnet sind, wobei sie koaxial und winklig im Verhältnis zu dieser entgegen ersten Reibungsmitteln (22) und am Umfang wirksamen ersten elastischen Mitteln (12) innerhalb eines begrenzten Winkelabstands beweglich sind, mit einer Nabe (3), die von der Mitnehmerscheibe (4) und den Führungsscheiben (11, 11') umschlossen ist, wobei sie koaxial und winklig im Verhältnis zur Mitnehmerscheibe (4) entgegen zweiten Reibungsmitteln (5) und am Umfang wirksamen zweiten elastischen Mitteln (8) in einem begrenzten Winkelabstand beweglich ist, wobei die besagten ersten und zweiten Reibungsmittel (22, 5) jeweils eine Reibscheibe (18, 19) umfassen, die axial zwischen ein und derselben Führungsscheibe (11) und der Mitnehmerscheibe (4) angeordnet und im Verhältnis zur Achse der Baugruppe zentriert ist, wobei die Reibscheibe (18) der ersten Reibungsvorrichtung (22) die Reibscheibe (19) der zweiten Reibungsvorrichtung (5) umgibt und wobei mindestens eine der besagten Reibscheiben (18, 19) drehfest mit der betroffenen Führungsscheibe (11) oder mit der Mitnehmerscheibe (4) verbunden ist, **dadurch gekennzeichnet** , daß Anschlagmittel (24) zwischen einer der besagten Reibscheiben (18, 19) und der Mitnehmerscheibe (4) oder der betroffenen Führungsacheibe (11) vorgesehen sind und daß axiale Haltemittel (25) zwischen den beiden besagten Reibscheiben (18, 19) vorgesehen sind.

2. Drehschwingungsdämpfer nach Anspruch 1, **dadurch gekennzeichnet**, daß die Anschlagmittel (24) aus Einrastmitteln bestehen.

3. Drehschwingungsdämpfer nach Anspruch 2, **dadurch gekennzeichnet**, daß die Einrastmittel (24) radial elastisch verformbare Ansätze (28) mit Haken (29) aufweisen, die eine Schulter bilden, wobei jeder dieser Ansätze durch eine Öffnung (27) in einer der Führungascheiben (11, 11') oder in der Mitnehmerscheibe (4) hindurchgeht und sich nach dem Durchgang durch die besagte Öffnung (27), gegebenenfalls nach Beseitigung eines Spiels, an der betroffenen Führungsscheibe (11, 11') bzw. an der besagten Mitnehmerscheibe (4) einhaken kann.

4. Drehschwingungsdämpfer nach Anspruch 3, **dadurch gekennzeichnet**, daß die besagten Ansätze (28) axial ausgerichtet und einstückig mit der Reibscheibe (18) der ersten Reibungsvorrichtung (22) ausgeführt sind, wobei sie mit den Stiften (26) für die drehfeste Verbindung mit der betroffenen Führungsscheibe (11, 11') bzw. der besagten Mitnehmerscheibe (4) verbunden sind, die durch die besagten öffnungen (27) hindurchgehen.

5. Drehschwingungsdämpfer nach Anspruch 4, **dadurch gekennzeichnet**, daß die Stifte (26) für die Anordnung der besagten Ansätze (28) unterbrochen sind und daß die besagten Ansätze (28) länger als die Stifte (26), aber weniger breit als diese ausgeführt sind.

6. Drehschwingungsdämpfer nach Anspruch 5, **dadurch gekennzeichnet**, daß der obere Teil der Stifte für die Anordnung der besagten Ansätze (28) unterbrochen ist, daß jeder Stift (26) eine längliche Form mit zwei geradlinigen Kanten aufweist, die durch einen abgerundeten Boden verbunden sind, und in seinem unteren Teil eine passend zur Form der Öffnung (27) ausgeführte Form besitzt und daß der Ansatz (28) durch seinen Haken (29) mit der radialen oberen Kante der Öffnung (27) zusammenwirken kann, wobei die besagte Kante geradlinig und breiter als der axial ausgerichtete Ansatz (28) ist, so daß ein seitlicher Kontakt zwischen dem Ansatz (28) und den Seitenkanten der Öffnung (27) nicht zu befürchten ist.

7. Drehschwingungsdämpfer nach einem der vorangehenden Ansprüche, **dadurch gekennzeichnet**, daß die axialen Haltemittel (25) eine radial ausgerichtete Schulter (36) umfassen, die zur betroffenen Führungsscheibe (11, 11') bzw. zur Mitnehmerscheibe (4) gerichtet ist und durch eine der Reibscheiben (18, 19) getragen wird, während die andere Reibscheibe eine Auflagefläche (37) aufweist, die mit der besagten Schulter (36) zusammenwirken kann.

8. Drehschwingungsdämpfer nach einem der Ansprüche 1 bis 7 , **dadurch gekennzeichnet**, das die axialen Haltemittel (25) zu Mitteln für die Vorpositionierung einer Scheibe eines der Reibungsmittel (5, 22) im Verhältnis zur anderen Scheibe des anderen der Reibungsmittel (22, 5) gehören.

9. Drehschwingungsdämpfer nach den Ansprüchen 7 und 8, **dadurch gekennzeichnet**, daß die Auflagefläche (37) zu Ansätzen (38) der Reibscheibe (19) der zweiten Reibungsvorrichtung (5) gehört, wobei die besagten Ansätze jeweils in eine dazu passende Aussparung (39) der Reibscheibe (18) der ersten Reibungsvorrichtung (22) eingreifen, und daß die besagten Aussparungen (39) durch die Schulter (36) verschlossen sind.

10. Drehschwingungsdämpfer nach Anspruch 8, **dadurch gekennzeichnet**, daß die axialen Haltemittel aus konischen Auflageflächen mit passender Form bestehen, welche die Reibscheiben (18, 19) der ersten Reibungsmittel (22) und der zweiten Reibungsmittel (5) an ihrer Innenperipherie bzw. an ihrer Außenperipherie aufweisen.

11. Drehschwingungsdämpfer nach einem der Vorangehenden Ansprüche, **dadurch gekennzeichnet** , daß zusätzliche Anschlagmittel (28') zwischen dem anderen der Elemente Mitnehmerscheibe (4) und Führungsscheibe (11), die nicht von den Anschlagmitteln (24) betroffen ist, vorgesehen sind.

12. Drehschwingungsdämpfer nach Anspruch 11, **dadurch gekennzeichnet**, daß die Reibscheibe (18) der besagten ersten Reibungsvorrichtung (22) zusätzliche radial elastisch verformbare Ansätze (28') mit Haken (29') umfaßt, die axial in entgegengesetzter Richtung zu den Ansätzen (28) verlaufen, um sich - gegebenenfalls nach Beseitigung eines Spiels - an dem anderen der besagten Elemente Mitnehmerscheibe (4) und betroffene Führungsscheibe (11, 11') nach dem Durchgang durch eine Öffnung (100) des besagten Elements einzuhaken.

## Claims

1. A torsion damping device, in particular for the clutch disc of a friction clutch for motor vehicles, comprising two guide rings (11, 11') which are disposed axially on either side of at least one damper plate (4), being coaxial and movable rotatably with respect to the latter, within the limits of an angular displacement and against the action of first friction means (22) and first circumferentially acting resilient means (12), a hub (3) surrounded by the damper plate (4) and the guide rings (11, 11') and coaxial with, and movable in rotation with respect to, the damper plate (4) within the limits of an angular displacement and against the action of second friction means (5) and second circumferentially acting resilient means (8), the said first and second friction means (22, 5) each including a friction ring (18, 19) which is disposed axially between a common one (11) of the said guide rings and the damper plate (40), being centred with respect to the axis of the assembly, with the said ring (18) of the first friction means (22) surrounding the ring (19) of the second friction means (5), at least one of the said friction rings (18, 19) being coupled with the corresponding guide ring (11) or the damper plate (4) for rotation therewith, characterised in that abutment means (24) are provided between one of the said friction rings (18, 19) and the damper plate (4) or the corresponding guide ring (11), and in that axial retaining means (25) are provided between the two said friction rings (18, 19).

2. A device according to Claim 1, characterised in that the abutment means (24) consist of snap fitting means.

3. A device according to Claim 2, characterised in that the snap fitting means (24) comprise lugs (28), resiliently deformable radially and having hooks (29) which define a shoulder, and each of which extends through a hole (27) in a corresponding one of the guide rings (11, 11') or in the damper plate (4), the hooks being adapted to hook on to the said guide ring (11, 11') or the said damper plate 4) after having passed through the said hole (27), and optionally after a clearance has been taken up.

4. A device according to Claim 2, characterised in that the said lugs (28) are orientated axially and are integral with the friction ring (18) of the first friction means (22), being associated with the bosses (26) which extend through the said holes (27), for coupling in rotation with the corresponding said guide ring (11, 11') or with the said damper plate (4).

5. A device according to Claim 4, characterised in that the bosses (26) are interrupted so as to leave the said lugs (28) free, and in that the said lugs (28) are longer than the bosses (26), being narrower than the latter.

6. A device according to Claim 5, characterised in that the upper portion of the bosses is interrupted so as to leave the said lugs (28) free, in that each boss (26) is of oblong form with two straight edges joined together through a rounded base portion, and has in its lower portion a profile complementary to that of the hole (27), and in that the lug (28) is adapted to cooperate, through its hook (29), with the upper radial edge of the hole (27), the said edge being straight and wider than the axially orientated lug (28), so that no lateral contact is possible between the lug (28) and the lateral edges of the hole (27).

7. A device according to any one of the preceding Claims, characterised in that the axial retaining means (25) comprise a radially orientated shoulder (36), facing towards the corresponding guide ring (11, 11') or the damper plate (4), and carried by one of the friction rings (18, 19), the other friction ring having an abutment surface (37) which is adapted to cooperate with the said shoulder (36).

8. A device according to any one of Claims 1 to 7, characterised in that the axial retaining means (25) are part of a means for prepositioning one ring of one of the friction means (5, 22) with respect to the other ring of the other friction means (22, 5).

9. A device according to Claims 7 and 8, characterised in that the abutment surface (37) is formed on lugs (38) of the friction ring (19) of the second friction means (5), each of the said lugs being engaged in a complementary slot (39) in the ring (18) of the first friction means (19), and in that the said slots (39) are closed by the shoulder (36).

10. A device according to Claim 8, characterised in that the axial retaining means consist of complementary conical engagement surfaces of the friction rings (18, 19) of the first friction means (22) and second friction means (5), at their inner periphery and outer periphery respectively.

11. A device according to any one of the preceding Claims, characterised in that supplementary abutment means (28') are arranged between the other one of the said elements, consisting of the damper plate (4) and guide ring (11), that is not associated with the abutment means (24).

12. A device according to Claim 11, characterised in that the friction ring (18) of the said first friction means (22) includes supplementary lugs (28'), which are resiliently deformable radially and include hooks (29'), and which are directed axially away from the lugs (28) so as to make hooking engagement on the other one of the said elements consisting of the damper plate (4) and the corresponding guide ring (11, 11') after having passed through a hole (100) in the said element, and optionally after a clearance has been taken up.
